# EUROPÄISCHE PATENTSCHRIFT

(11) **EP 3 932 515 B1**
(45) Veröffentlichungstag und Bekanntmachung des Hinweises auf die Patenterteilung: **17.05.2023**
(21) Anmeldenummer: 21183115.1
(22) Anmeldetag: 01.07.2021
(51) Int. Cl.: B01D 33/23, B01D 29/03

(54) **ROTATIONSSCHEIBENFILTER**
ROTATING DISK FILTER
FILTRE À DISQUE ROTATIF

(30) Priorität: 02.07.2020 DE 102020117493
(43) Veröffentlichungstag der Anmeldung: 05.01.2022
(73) Patentinhaber: Huber SE, 92334 Berching (DE)
(72) Erfinder: Kerl, Thomas, 92360 Muehlhausen (DE); Regnat, Winfried, 92334 Berching (DE); Schmausser, Simon, 92364 Waltersberg (DE)
(74) Vertreter: Canzler & Bergmeier Patentanwälte Partnerschaft mbB

(56) Entgegenhaltungen:
- WO-A1-2009/105015
- WO-A1-2018/222130
- DE-A1-102009 029 244
- US-A- 4 162 982

## Beschreibung

Die vorliegende Erfindung betrifft einen Rotationsscheibenfilter mit einem Zentrumsrohr sowie mehrere in Längsrichtung des Zentrumsrohrs benachbart zueinander angeordneten und mit dem Zentrumsrohr verbundenen Filterscheiben, wobei jede Filterscheibe mehrere in Umfangsrichtung des Zentrumsrohrs benachbart zueinander angeordnete Filtermodule umfasst, die jeweils einen Grundrahmen sowie zwei Filterelemente mit jeweils einem Filterrahmen und einer mit dem Filterrahmen verbundenen Filterfläche aufweisen, wobei der Grundrahmen und die beiden Filterelemente einen Hohlraum zur Aufnahme von zu filternder Flüssigkeit begrenzen, wobei der Hohlraum zum Flüssigkeitsaustausch mit dem Zentrumsrohr in Fluidverbindung steht, und wobei die Filterrahmen beidseitig und lösbar mit dem Grundrahmen verbunden sind, so dass die Filterelemente bei Bedarf vom Grundrahmen entfernbar und durch neue Filterelemente ersetzbar sind.

Ein gattungsgemäßer Rotationsscheibenfilter ist beispielsweise aus der DE 10 2009 029 244 A1 bekannt. Entsprechende Rotationsscheibenfilter, und das gilt auch für den Rotationsscheibenfilter gemäß vorliegender Erfindung, dienen beispielsweise dem Entfernen von Feststoffen aus Abwässern. WO2009105015 offenbart einen Rotationsscheibenfilter mit einem Zentrumsrohr verbundenen Filterscheiben, wobei jede Filterscheibe mehrere Filtermodule umfasst, wobei jedes Modul mit Hilfe einer Gewindespindel unabhängig von den übrigen Filtermodulen am Zentrumsrohr fixiert ist.

Prinzipiell umfasst ein Rotationsscheibenfilter ein Behältnis, in dem die einzelnen Filterscheiben benachbart zueinander auf dem Zentrumsrohr angeordnet sind. Das Zentrumsrohr ist mit Hilfe eines Antriebs und gemeinsam mit den einzelnen Filterscheiben um seine Längsachse antreibbar. Wird nun das zu reinigende Abwasser in das Zentrumsrohr geleitet, so strömt dieses ausgehend vom Zentrumsrohr über entsprechende Öffnungen in die einzelnen Filtermodule der Filterscheiben. Anschließend tritt die Flüssigkeit über die Filterflächen der Filtermodule nach außen, wohingegen die im Abwasser vorhandenen Feststoffe abhängig von der Maschenweite des Filtermaterials der Filterflächen zurückgehalten werden.

Innerhalb des Zentrumsrohrs verläuft in der Regel eine Austragsvorrichtung für die zurückgehaltenen Feststoffe, welche bei einem gewissen Drehwinkel der Filterscheiben schwerkraftbedingt nach unten und durch die Öffnung im Zentrumsrohr in dieses zurückfallen. Dort gelangen sie auf die Austragsvorrichtung und können aus dem Rotationsscheibenfilter entfernt werden.

Bisher ist es bekannt, die einzelnen Filtermodule, aus denen sich die Filterscheiben zusammensetzen, mit Hilfe von Schraubenverbindungen mit dem Zentrumsrohr zu verbinden, wobei die Schraubenverbindungen im Bereich des direkt mit dem Zentrumsrohr in Kontakt stehenden Abschnitts des jeweiligen Filtermoduls angeordnet sind.

Aufgabe der vorliegenden Erfindung ist es, den bekannten Stand der Technik weiterzubilden.

Die Aufgabe wird gelöst durch einen Rotationsscheibenfilter mit den Merkmalen des unabhängigen Patentanspruchs.

Vorgeschlagen wird ein Rotationsscheibenfilter mit einem Zentrumsrohr sowie mehreren in Längsrichtung des Zentrumsrohrs benachbart zueinander angeordneten und mit dem Zentrumsrohr verbundenen Filterscheiben. Die einzelnen Filterscheiben setzen sich wiederum aus jeweils mehreren Filtermodulen zusammen, die in Umfangsrichtung um das Zentrumsrohr angeordnet sind.

Jedes Filtermodul umfasst jeweils einen Grundrahmen sowie zwei Filterelemente mit jeweils einem Filterrahmen und jeweils einer mit dem Filterrahmen verbundenen Filterfläche. Der Grundrahmen sowie die Filterrahmen weisen im Wesentlichen eine Trapezform auf. Die Trapezformen umfassen zwei bezogen auf die Längsachse des Zentrumsrohrs radial verlaufende Abschnitte sowie zwei vorzugsweise leicht gebogene Abschnitte, welche die radial verlaufenden Abschnitte miteinander verbinden. Insbesondere verlaufen die gebogenen Abschnitte konzentrisch mit dem Zentrumsrohr.

Als Filtermaterial für die Filterfläche können verschiedene Materialien zum Einsatz kommen, wie beispielsweise ein Maschengewebe oder ein Flor. Insbesondere ist es von Vorteil, wenn das Filtermaterial und damit auch die Filterflächen eben ausgebildet und mit den Filterrahmen verklebt oder verschweißt sind.

Um bei einer Beschädigung einer der Filterflächen nicht das gesamte Filtermodul auswechseln zu müssen, ist ferner vorgesehen, dass die Filterrahmen, mit denen die Filterflächen verbunden sind, lösbar am jeweiligen Grundrahmen fixiert sind. Der Grundrahmen und die beiden Filterelemente können also voneinander separiert werden, ohne dass eines der Bestandteile des Filtermoduls beschädigt oder zerstört werden muss. Beispielsweise können der Grundrahmen und die beidseitig mit dem Grundrahmen verbundenen Filterelemente mit Hilfe von Klipsverbindungen oder der nachfolgend noch näher beschriebenen Schraubverbindungen lösbar miteinander verbunden sein.

Erfindungsgemäß ist nun vorgesehen, dass jedes Filtermodul mit Hilfe einer Gewindespindel unabhängig von den übrigen Filtermodulen am Zentrumsrohr fixiert ist, wobei sich die Gewindespindel bezogen auf das Zentrumsrohr in radialer Richtung durch das Filtermodul erstreckt. Die Gewindespindeln sind beispielsweise mit dem Zentrumsrohr verschraubt und ragen bezogen auf die Längsachse (= Rotationsachse) des Zentrumsrohrs radial nach außen. Auf jede Gewindespindel ist ein Filtermodul aufgesteckt, d.h. die Gewindespindel verläuft ausgehend vom Zentrumsrohr durch das Filtermodul und ist mit diesem in dessen, bezogen auf das Zentrumsrohr, außen liegendem Abschnitt verbunden.

Vorzugsweise verläuft die Gewindespindel mittig durch das jeweilige Filtermodul. Die Gewindespindel kann über ihre gesamte Länge oder auch nur abschnittsweise mit einem Gewinde versehen sein. Insbesondere ist es von Vorteil, wenn die Gewindespindel sowohl gegenüber dem Zentrumsrohr als auch gegenüber dem Filtermodul jeweils mit einer separaten Mutter gesichert ist. Ebenso ist es denkbar, dass das Zentrumsrohr und/oder das Filtermodul Gewinde bzw. Gewindebuchsen aufweisen, in welche die Gewindespindel eingreift.

Während der Montage des Rotationsscheibenfilters werden nun die einzelnen Filtermodule über die von dem Zentrumsrohr nach außen ragenden Gewindespindeln gesteckt. Anschließend wird der bezogen auf das Zentrumsrohr außenliegende Abschnitt des jeweiligen Filtermoduls mit Hilfe einer Mutter gegenüber der Gewindespindel fixiert und durch Anziehen der Mutter in Richtung des Zentrumsrohrs gezogen. Hierdurch wird das Filtermodul gegen das Zentrumsrohr gepresst und liegt entsprechend flüssigkeitsdicht an diesem an. Um die Dichtigkeit sicherzustellen, können zwischen den Filtermodulen und dem Zentrumsrohr einzelne Dichtungen angeordnet sein.

Des Weiteren ist es vorteilhaft, wenn die Filtermodule ausschließlich durch die Gewindespindeln mit dem Zentrumsrohr verbunden sind und keine direkte gegenseitige Fixierung benachbarter Filtermodule in Umfangsrichtung des Zentrumsrohrs vorhanden ist. Benachbarte Filtermodule einer Filterscheibe können zwar aneinander anliegen. Insbesondere ist dies auch vorgesehen. Vorzugsweise weisen die Grundrahmen jeweils im Bereich ihrer bezogen auf das Zentrumsrohr radial nach außen stehenden Abschnitte jeweils eine Öffnung auf, so dass das zu filternder Abwasser während der Rotation der Filterscheiben von einem Filtermodul ins benachbarte Filtermodul derselben Filterscheibe strömen kann. Ein Schöpfeffekt wird hierdurch vermindert.

Auch wenn sich benachbarte Filtermodule berühren können, sind diese jedoch vorzugsweise nicht gegeneinander fixiert. Die Lage der Filterelemente relativ zueinander sowie bezogen auf das Zentrumsrohr wird also vorzugsweise ausschließlich durch die in Richtung des Zentrumsrohrs wirkende Kraft bewirkt, die durch die Gewindespindel erzeugt wird. Zwar können zusätzlich auch formschlüssige Verbindungsbereiche zwischen benachbarten Filtermodulen vorhanden sein (beispielsweise in Form von Nuten und in die Nuten eingreifenden Ausbuchtungen). Entsprechende Verbindungsbereiche dienen jedoch ausschließlich dazu, dass die Filtermodule in Richtung der Längsachse des Zentrumsrohrs nicht relativ zueinander bewegt werden können. Hingegen bewirken sie keine gegenseitige Fixierung benachbarter Filtermodule in Umfangsrichtung. Mit anderen Worten: wenn die Verbindung zwischen der Gewindespindel und dem jeweiligen Filtermodul gelöst wurde, kann das Filtermodul aus der entsprechenden Filterscheibe entfernt werden, ohne dass hierfür Verbindungen zwischen einzelnen Filtermodulen gelöst werden müssten.

Auch ist es von Vorteil, wenn die Filtermodule jeweils eine innenliegende Führung für eine der Gewindespindeln aufweisen. Eine entsprechende Führung erleichtert während der Montage des Rotationsscheibenfilters das Aufstecken der Filtermodule auf die einzelnen Gewindespindeln. Die Führung kann beispielsweise durch ein oder mehrere Leitflächen gebildet sein, die innerhalb des Hohlraums des Filtermoduls angeordnet sind oder sich in diesen erstrecken.

Ebenso bringt es Vorteile mit sich, wenn die Führung ein Führungsrohr umfasst, welches sich zwischen zwei gegenüberliegenden Seiten des Grundrahmens erstreckt und mit diesem verbunden ist. Bei den gegenüberliegenden Seiten handelt es sich um die an dem Zentrumsrohr anliegende Seite sowie der dieser Seite (bezogen auf den Hohlraum) gegenüberliegende Seite des Filtermoduls. Insbesondere sollte das Führungsrohr zwischen den genannten Seiten vollständig nach außen hin geschlossen sein und die Gewindespindel nach Aufstecken des Filtermoduls vollständig umgeben. Dies hat den Vorteil, dass die Gewindespindel beim Betrieb des Rotationsscheibenfilters nicht mit dem zur reinigenden Abwasser in Kontakt gelangt und es somit zu keiner Oxidation der Oberfläche der Gewindespindel kommt.

Vorteile bringt es auch mit sich, wenn das Führungsrohr Bestandteil des Grundrahmens ist oder direkt mit diesem verbunden ist. Insbesondere ist es von Vorteil, wenn das Führungsrohr eine Verbindung der dem Zentrumsrohr benachbarten Seite des Grundrahmens und der dieser Seite gegenüberliegenden äußeren Seite des Grundrahmens darstellt. Somit kann das Verbindungsrohr zur Stabilität des Grundrahmens beitragen. Das Führungsrohr kann im Übrigen aus Kunststoff oder auch Metall gefertigt sein.

Auch ist es von Vorteil, wenn die beiden Filterrahmen eines Filtermoduls mit Hilfe von Schrauben direkt miteinander verbunden sind. Die Filterrahmen sind vorzugsweise nicht mit dem Grundrahmen verschraubt. Vielmehr ist es von Vorteil, wenn sich die Schrauben von einem Filterrahmen bis zum Zweiten Filterrahmen erstrecken, so dass die einzelnen Filterelemente eines Filtermoduls mit Hilfe der Schrauben gegenseitig fixiert sind.

Vorteile bringt es mit sich, wenn der Grundrahmen Durchgangsbohrungen aufweist, durch die sich die Schrauben ausgehend von einem Filterrahmen bis zum zweiten Filterrahmen erstrecken. Die Durchgangsbohrungen haben hierbei einen Durchmesser, der größer ist als der Außendurchmesser der Schrauben, so dass die Schrauben ohne oder mit nur geringem Aufwand durch die Durchgangsbohrungen gesteckt werden können. Die Schrauben durchdringen die Durchgangsbohrungen. Werden die Schrauben nun angezogen, so werden die beiden Filterrahmen aufeinander zu und damit von beiden Seiten gegen den Grundrahmen gezogen. Vorzugsweise sind zwischen dem Grundrahmen und den Filterelementen Dichtungselemente angeordnet, um die Dichtigkeit des Filtermoduls im Bereich der entsprechenden Kontaktstellen sicherzustellen.

Vorteile bringt es zudem mit sich, wenn die Schrauben jeweils direkt in ein Gewinde im Filterrahmen eingreifen. Das Gewinde kann entweder vor dem Zusammenbau des Filtermoduls in den jeweiligen Filterrahmen geschnitten worden sein. Ebenfalls ist es denkbar, dass die Filterrahmen Gewindebuchsen aufweisen, in welche die Schrauben eingreifen. Vorzugsweise ist jedoch vorgesehen, dass die Filterrahmen einzelne (Sack-)Bohrungen aufweisen, welche vor dem ersten Zusammenbau des Filtermoduls noch kein Gewinde aufweisen. Vielmehr entsteht das Gewinde durch das Eindringen der entsprechenden Schraube. Die Schraube schneidet also ihr eigenes Gewinde in die entsprechende Bohrung.

Auch ist es von Vorteil, wenn sich ein erster Teil der Schraubenköpfe der Schrauben eines Filtermoduls auf der Seite des ersten Filterrahmens und ein zweiter Teil der Schraubenköpfe auf der Seite des zweiten Filterrahmens des Filtermoduls befindet. Jeder Filterrahmen besitzt damit vorzugsweise eine gewisse Anzahl von Bohrungen, durch die sich Schrauben von außen stecken lassen. Ebenso sind Bohrungen vorhanden, die vorzugsweise als Sackbohrungen ausgeführt sind. In diese Bohrungen greifen schließlich Schrauben, die ausgehend vom jeweils anderen Filterrahmen durch die Bohrungen des anderen Filterrahmens sowie die Durchgangsbohrungen des Grundrahmens gesteckt wurden. In die Sackbohrungen werden vorzugsweise durch die Schrauben die oben genannten Gewinde geschnitten.

Des Weiteren ist es vorteilhaft, wenn die Filterrahmen und der Grundrahmen eines Filtermoduls mit Hilfe von Verbindungselementen formschlüssig in Verbindung stehen, wobei die Verbindungselemente eine Relativbewegung zwischen Filterrahmen und Grundrahmen in Richtung der Längserstreckung der Gewindespindel begrenzen oder verhindern. Insbesondere ist es von Vorteil, wenn die Verbindungselemente auf der (bezogen auf das Zentrumsrohr) außenliegenden Seite des jeweiligen Filtermoduls angeordnet sind. Insbesondere sollten die Verbindungselemente auf dieser Seite mittig und damit unmittelbar benachbart zur Gewindespindel angeordnet sein. Wird nun die genannte Seite mit Hilfe der Gewindespindel bzw. einer mit der Gewindespindel zusammenwirkenden Mutter in Richtung des Zentrumsrohrs gezogen, um das Filtermodul gegenüber dem Zentrumsrohr zu fixieren, so stellen die Verbindungselemente sicher, dass es zu keiner Relativbewegung zwischen Grundrahmen und den Filterelementen kommen kann. Die über die Gewindespindel auf den Grundrahmen ausgeübte Kraft wirkt somit auch auf die Filterelemente, so dass diese einen Teil der von der Gewindespindel auf den Grundrahmen ausgeübte Kraft aufnehmen.

Auch ist es von Vorteil, wenn ein Teil der Verbindungselemente als Zapfen und ein weiterer Teil der Verbindungselemente als Vertiefungen ausgebildet sind, wobei die Zapfen in die Vertiefungen ragen. Beispielsweise wäre es denkbar, dass der Grundrahmen mehrere Zapfen aufweist, wobei jeweils zumindest ein Zapfen in Richtung des ersten Filterrahmens und jeweils ein weiterer Zapfen in Richtung des zweiten Filterrahmens ragt. Die beiden Filterrahmen weisen entsprechende Vertiefungen auf, in welche die Zapfen eingreifen, wenn die Filterrahmen mit dem Grundrahmen verbunden sind. Selbstverständlich können auch die Grundrahmen die Vertiefungen und die Filterrahmen die Zapfen aufweisen.

Auch ist es vorteilhaft, wenn die Filterrahmen jeweils eine oder mehrere Verstrebungen aufweisen, die sich zwischen gegenüberliegenden und/oder benachbarten Abschnitten des Filterrahmens erstreckt bzw. erstrecken. Hierdurch wird die Stabilität des Filtermoduls gegenüber einer Variante ohne Verstrebungen deutlich erhöht. Die Verstrebung bzw. die Verstrebungen können einteilig mit dem jeweiligen Filterrahmen ausgebildet sein. Ebenso ist es denkbar, dass auch der Grundrahmen eine oder mehrere Verstrebungen aufweist. Beispielsweise ist bzw. sind die Verstrebung(en) des Filterrahmens auf der dem Hohlraum des Filtermoduls zugewandten Seite der Filterfläche angeordnet. Vorteilhaft ist es aber auch, wenn die Filterfläche bezogen auf den Hohlraum von innen an der oder den Verstrebungen anliegt. Die Filterfläche wird hierdurch beim Filtervorgang, bei dem die Flüssigkeit ausgehend vom Hohlraum nach außen durch die Filterflächen strömt, durch die Verstrebung(en) abgestützt.

Auch ist es von Vorteil, wenn die oder eine der Verstrebungen eines jeweiligen Filtermoduls Y-förmig ausgebildet ist. Die Verstrebung weist damit drei Schenkel auf, wobei jeder Schenkel mit einer anderen Seite des Filterrahmens in Verbindung steht. Hierdurch können Kräfte von einer Seite auf eine benachbarte Seite übertragen werden.

Vorteile bringt es mit sich, wenn sich die Gewindespindel parallel zu einem Schenkel der Y-förmigen Verstrebung erstreckt. Insbesondere sollte jeweils ein Schenkel mit einem bezogen auf die Längsachse des Zentrumsrohrs radial verlaufenden Abschnitt des Filterrahmens sowie ein dritter Schenkel mit der bezogen auf das Zentrumsrohr außenliegenden Seite des Filterrahmens verbunden sein. Wird nun über die Gewindespindel eine Kraft auf die genannte außenliegende Seite ausgeübt, so kann diese Kraft über die Verstrebung an die beiden angrenzenden radial verlaufenden Abschnitte des Filterrahmens weitergeleitet werden. Die zuletzt genannten Abschnitte liegen wiederum jeweils an korrespondierenden Abschnitten der benachbarten Filtermodule einer Filterscheibe an, so dass die eingebrachte Kraft keine Verbiegung der Filterrahmen bewirkt. Vielmehr wird durch die Krafteinleitung sichergestellt, dass die Filtermodule als Ganzes stabil gegen das Zentrumsrohr gezogen werden.

Weitere Vorteile der Erfindung sind in den nachfolgenden Ausführungsbeispielen beschrieben. Es zeigen:
- **Figur 1**: eine schematische perspektivische Ansicht eines Rotationsscheibenfilters,
- **Figur 2**: eine teilweise montierte Filterscheibe,
- **Figur 3**: die Bestandteile eines erfindungsgemäßen Filtermoduls vor dessen Zusammenbau, und
- **Figur 4**: einen teilweise geschnittenen Abschnitt eines erfindungsgemäßen Filtermoduls.

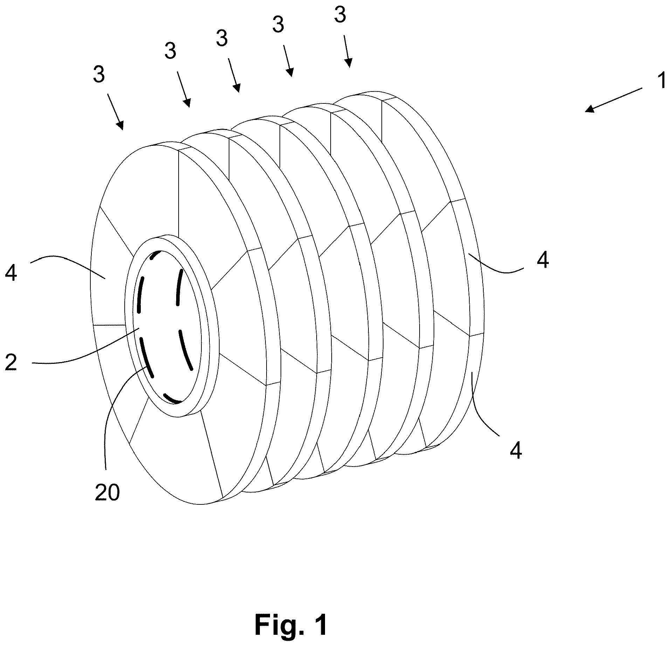

Figur 1 zeigt einen Rotationsscheibenfilter 1, wobei lediglich dessen Zentrumsrohr 2 sowie die mit dem Zentrumsrohr 2 verbundenen, und die einzelnen Filterscheiben 3 bildenden, Filtermodule 4 dargestellt sind. Selbstverständlich umfasst der Rotationsscheibenfilter 1 weitere Bauteile, wie beispielsweise ein die Filterscheiben 3 aufnehmendes Behältnis für die zu reinigende Flüssigkeit oder einen Antrieb, um das Zentrumsrohr 2 mit den Filterscheiben 3 in einer Rotationsbewegung antreiben zu können. Auch weist der Rotationsscheibenfilter 1 einen nicht gezeigten Zulauf für das zu filternde Abwasser sowie einen ebenfalls nicht gezeigten Ablauf für das Filtrat auf. Ferner ist eine nicht dargestellte Austragsvorrichtung vorhanden, mit deren Hilfe die von den Filterflächen 8 der Filterscheiben 3 zurückgehaltenen Feststoffe aus dem Rotationsscheibenfilter 1 ausgetragen werden können.

Prinzipiell umfasst der Rotationsscheibenfilter 1 also ein während der Filtration in Rotation versetztes Zentrumsrohr 2, auf dem einzelne Filtermodule 4 befestigt sind, wobei mehrere in Umfangsrichtung benachbart zueinander angeordnete Filtermodule 4 die einzelnen Filterscheiben 3 bilden.

An dieser Stelle sei darauf hingewiesen, dass in den Figuren teilweise nur ein Teil von mehreren gleichartigen Elementen (wie beispielsweise die Filtermodule 4 in Figur 1) mit einem Bezugszeichen versehen sind, um die Übersicht zu erhöhen. Prinzipiell handelt es sich bei gleichartig dargestellten Elementen jedoch um Elemente gleicher Art, auch wenn nicht alle derartigen Elemente mit einem Bezugszeichen versehen sind.

Während der Filtration des zu filternden Abwassers strömt dieses über das Zentrumsrohr 2 und letztendlich über die Öffnungen 20 desselben in die einzelnen Filtermodule 4 (auch deren Grundrahmen 5 weisen entsprechende Öffnungen 21 auf). Während das Filtrat durch die Filterflächen 8 der Filtermodule 4 vom innerhalb der Filtermodule 4 angeordneten Hohlraum 9 nach außerhalb der Filterscheiben 3 strömt, werden Feststoffe bis zu einer bestimmten Partikelgröße von den Filterflächen 8 der Filtermodule 4 zurückgehalten. Auf diese Weise erfolgt eine Trennung der Feststoffe vom Filtrat.

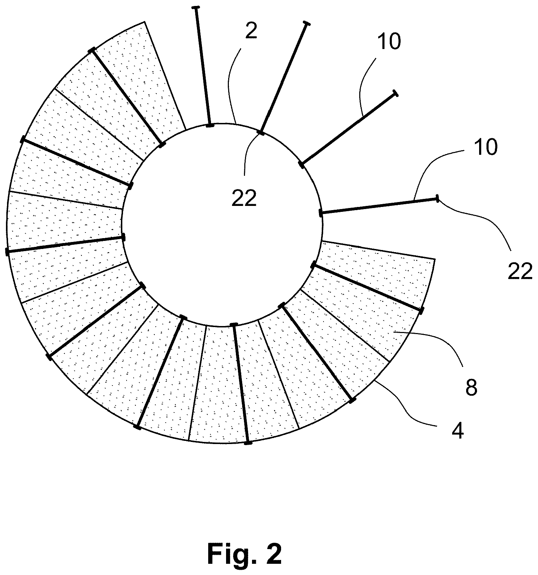

Figur 2 zeigt nun eine mögliche Ausführungsform der erfindungsgemäßen Befestigung der Filtermodule 4 am Zentrumsrohr 2. Wie dieser Figur zu entnehmen ist, erstrecken sich ausgehend vom Zentrumsrohr 2 mehrere Gewindespindeln 10 radial nach außen. Die Gewindespindeln 10 sind beispielsweise mit Hilfe von Muttern 22 gegenüber dem Zentrumsrohr 2 fixiert. Selbstverständlich kann das Zentrumsrohr 2 auch ein Gewinde aufweisen, welches mit der jeweiligen Gewindespindel 10 zusammenwirkt. Auch andere Befestigungsmöglichkeiten, beispielsweise ein Verschweißen der Gewindespindeln 10 mit dem Zentrumsrohr 2, sind denkbar.

Um die Filtermodule 4 mit dem Zentrumsrohr 2 zu verbinden, werden diese, wie nachfolgend noch näher beschrieben, über die Gewindespindeln 10 gesteckt und mit Hilfe einer Mutter 22 von außen fixiert. Die äußeren Muttern 22 bewirken also, dass die Filtermodule 4 in Richtung des Zentrumsrohrs 2 gepresst werden und schließlich dichtend an diesem anliegen.

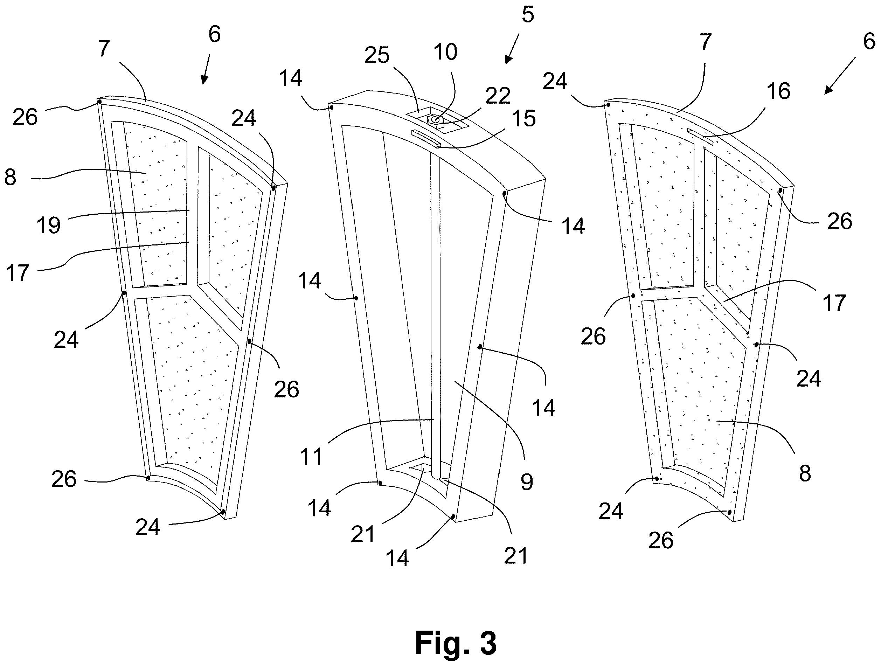

Figur 3 zeigt die einzelnen Hauptbestandteile einer möglichen Ausführungsform eines erfindungsgemäßen Filtermoduls 4. Das Filtermodul 4 weist einen Grundrahmen 5 auf, mit dem beidseitig jeweils ein Filterelement 6 verbunden ist. Das Filterelement 6 besteht wiederum aus einem Filterrahmen 7, vorzugsweise aus Kunststoff, sowie einer Filterfläche 8 aus einem Filtermaterial, wobei die Filterfläche 8 mit dem Filterrahmen 7 vorzugsweise verklebt oder verschweißt ist.

Um die Filterrahmen 7 und damit die Filterelemente 6 als Ganzes mit dem Grundrahmen 5 verbinden zu können, weist ein erster Filterrahmen 7 eine Vielzahl von Bohrungen 26 auf, durch die sich bei der Montage des Filtermoduls 4 jeweils eine Schraube 12 stecken lässt. Der Grundrahmen 5 weist eine entsprechende Anzahl von Durchgangsbohrungen 14 auf, die dem Durchtritt der Schrauben 12 dienen. Schließlich weist der zweite Filterrahmen 7 mehrere Sackbohrungen 24 auf, in welche sich die vom ersten Filterrahmen 7 ausgehenden Schrauben 12 einschrauben lassen.

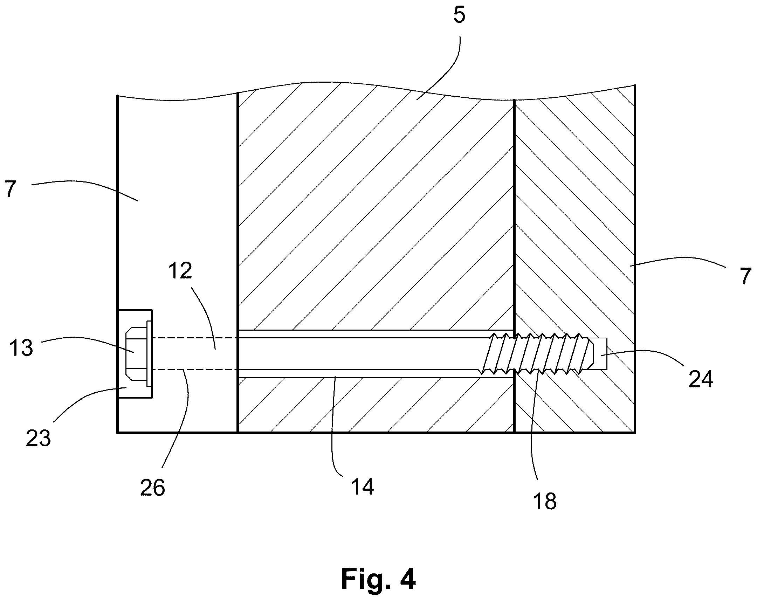

In diesem Zusammenhang sei auf Figur 4 verwiesen, die einen teilweise geschnittenen und bezogen auf Figur 3 unten angeordneten Ausschnitt eines fertig montierten Filtermoduls 4 zeigt. Wie aus dieser Figur zu entnehmen ist, erstreckt sich die Schraube 12 von einer Schraubenkopfaufnahme 23 (= Vertiefung zur Aufnahme des Schraubenkopfes 13 ) durch eine Bohrung 26 im bezogen auf die Blattebene links angeordneten Filterrahmen 7, durch die Durchgangsbohrung 14 im Grundrahmen 5 bis in eine Sackbohrung 24 im rechts angeordneten zweiten Filterrahmen 7. Das Gewinde 18 der Schraube 12 wurde in diese Sackbohrung 24 eingedreht, so dass im Bereich der Sackbohrung 24 ein Innengewinde in den Filterrahmen 7 geschnitten wurde. Auf eine separate Mutter 22 kann in diesem Fall verzichtet werden.

Im Übrigen sei an dieser Stelle darauf hingewiesen, dass es durchaus von Vorteil sein kann, wenn sich ein Teil der in Figur 3 gezeigten Schrauben 12 bezogen auf die Blattebene von links und ein zweiter Teil von rechts in das Filtermodul 4 erstreckt. Mit anderen Worten: ein Teil der Schrauben 12 ist analog zu Figur 4 eingeschraubt, während ein zweiter Teil der Schrauben 12 bezogen auf Figur 4 von rechts nach links eingedreht wurde. Die Bohrung 26 befindet sich in diesem Fall im Bereich des in Figur 3 gezeigten rechten Filterrahmens 7, während sich die Sackbohrung 24 im Bereich des linken Filterrahmens 7 befindet. Auch können die Schrauben 12 abwechselnd einmal von links und einmal von rechts, d.h. einmal ausgehend vom ersten Filterrahmen 7 und einmal ausgehend vom zweiten Filterrahmen 7, eingedreht sein. Eine derartige Lösung ist auch in Figur 3 gezeigt. Hierdurch erfolgt ein besonders gleichmäßiger Krafteintrag.

Figur 3 zeigt des Weiteren, dass es von Vorteil ist, wenn der Grundrahmen 5 ein Führungsrohr 11 aufweist, durch welches die Gewindespindel 10 gesteckt werden kann, wenn der Grundrahmen 5 mit den daran befestigten Filterrahmen 7 auf eine in Figur 2 gezeigte, bisher nicht von einem Filtermodul 4 besetzte, Gewindespindel 10 aufgesteckt wird. Der Grundrahmen 5 und damit das gesamte Filtermodul 4 kann schließlich mit einer Mutter 22 gegenüber der Gewindespindel 10 fixiert und dabei gegen das Zentrumsrohr 2 gepresst werden. Zur Aufnahme der Mutter 22 kann im Übrigen im bezogen auf Figur 3 oberen Bereich des Grundrahmens eine Ausbuchtung 25 vorhanden sein. Dieser obere Bereich stellt nach der Fixierung am Zentrumsrohr 2 den äußeren Bereich des Filtermoduls 4 dar (vergleiche obige Beschreibung).

Um die von der Mutter 22 auf den äußeren Bereich des Grundrahmens 5 ausgeübte Kraft gleichmäßig in das Filtermodul 4 einzuleiten, ist es von Vorteil, wenn der Grundrahmen 5, und/oder wie in Figur 3 gezeigt, die Filterrahmen 7 eine oder mehrere Verstrebungen 17 aufweisen. Insbesondere ist es von Vorteil, wenn die jeweilige Verstrebung 17 eine Y-Form aufweist, wobei ein Schenkel 19 ausgehend vom genannten äußeren Bereich des Filtermoduls 4 parallel zur Gewindespindel 10 verläuft. Dieser Schenkel 19 teilt sich schließlich in zwei weitere Schenkel 19 der Y-Form, welche mit den bezogen auf das Zentrumsrohr 2 radial verlaufenden Abschnitten der Filterrahmen 7 verbunden sind. Um nun die von der Mutter 22 auf den Grundrahmen 5 ausgeübte Kraft auf die Filterrahmen 7 zu übertragen, ist es von Vorteil, wenn die Filterrahmen 7 und der Grundrahmen 5 Verbindungselemente aufweisen.

Im Beispiel von Figur 3 sind die Verbindungselemente als Zapfen 15 sowie mit den Zapfen 15 korrespondierende Vertiefungen 16 ausgebildet. Nach der Verbindung der Filterrahmen 7 mit dem Grundrahmen 5 greifen die beidseitig angeordneten Zapfen 15 in die jeweiligen Vertiefungen 16 der Filterrahmen 7 (selbstverständlich weist der Grundrahmen 5 auch auf der in Figur 3 nicht sichtbaren Rückseite einen entsprechenden Zapfen 15 auf; ebenso weist der links dargestellte Filterrahmen 7 auf seiner nicht sichtbaren Rückseite eine Vertiefung 16 auf, in welche der sichtbare Zapfen 15 im montierten Zustand des Filtermoduls 4 eingreift).

Schließlich zeigt Figur 3, dass es von Vorteil ist, wenn die Filterfläche 8 zwischen dem Filterrahmen 7 und dem Grundrahmen 5 angeordnet ist. In diesem Fall wird die Filterfläche 8 durch die Verstrebung 17 nach außen abgestützt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Rotationsscheibenfilter
- 2: Zentrumsrohr
- 3: Filterscheibe
- 4: Filtermodul
- 5: Grundrahmen
- 6: Filterelement
- 7: Filterrahmen
- 8: Filterfläche
- 9: Hohlraum
- 10: Gewindespindel
- 11: Führungsrohr
- 12: Schraube
- 13: Schraubenkopf
- 14: Durchgangsbohrung
- 15: Zapfen
- 16: Vertiefung
- 17: Verstrebung
- 18: Gewinde
- 19: Schenkel
- 20: Öffnung im Zentrumsrohr
- 21: Öffnung im Grundrahmen
- 22: Mutter
- 23: Schraubenkopfaufnahme
- 24: Sackbohrung
- 25: Ausbuchtung
- 26: Bohrung

## Patentansprüche

1. Rotationsscheibenfilter (1) mit einem Zentrumsrohr (2) sowie mehreren in Längsrichtung des Zentrumsrohrs (2) benachbart zueinander angeordneten und mit dem Zentrumsrohr (2) verbundenen Filterscheiben (3),
- wobei jede Filterscheibe (3) mehrere in Umfangsrichtung des Zentrumsrohrs (2) benachbart zueinander angeordnete Filtermodule (4) umfasst, die jeweils einen Grundrahmen (5) sowie zwei Filterelemente (6) mit jeweils einem Filterrahmen (7) und einer mit dem Filterrahmen (7) verbundenen Filterfläche (8) aufweisen,
- wobei der Grundrahmen (5) und die beiden Filterelemente (6) einen Hohlraum (9) zur Aufnahme von zu filternder Flüssigkeit begrenzen,
- wobei der Hohlraum (9) zum Flüssigkeitsaustausch mit dem Zentrumsrohr (2) in Fluidverbindung steht, und
- wobei die Filterrahmen (7) beidseitig und lösbar mit dem Grundrahmen (5) verbunden sind, so dass die Filterelemente (6) bei Bedarf vom Grundrahmen (5) entfernbar und durch neue Filterelemente (6) ersetzbar sind,
**dadurch gekennzeichnet, dass** jedes Filtermodul (4) mit Hilfe einer Gewindespindel (10) unabhängig von den übrigen Filtermodulen am Zentrumsrohr (2) fixiert ist, wobei sich die Gewindespindel (10) bezogen auf das Zentrumsrohr (2) in radialer Richtung durch das Filtermodul (4) erstreckt.

2. Rotationsscheibenfilter (1) gemäß dem vorangegangenen Anspruch, **dadurch gekennzeichnet, dass** die Filtermodule (4) ausschließlich durch die Gewindespindeln (10) mit dem Zentrumsrohr (2) verbunden sind und keine direkte gegenseitige Fixierung benachbarter Filtermodule (4) in Umfangsrichtung des Zentrumsrohrs (2) vorhanden ist.

3. Rotationsscheibenfilter (1) gemäß einem der vorangegangenen Ansprüche, **dadurch gekennzeichnet, dass** die Filtermodule (4) jeweils eine innenliegende Führung für eine der Gewindespindeln (10) aufweisen.

4. Rotationsscheibenfilter (1) gemäß einem der vorangegangenen Ansprüche, **dadurch gekennzeichnet, dass** die Führung ein Führungsrohr (11) umfasst, welches sich zwischen zwei gegenüberliegenden Seiten des Grundrahmens (5) erstreckt und mit diesem verbunden ist.

5. Rotationsscheibenfilter (1) gemäß dem vorangegangenen Anspruch, **dadurch gekennzeichnet, dass** das Führungsrohr (11) Bestandteil des Grundrahmens (5) ist oder direkt mit diesem verbunden ist.

6. Rotationsscheibenfilter (1) gemäß einem der vorangegangenen Ansprüche, **dadurch gekennzeichnet, dass** die beiden Filterrahmen (7) eines Filtermoduls (4) mit Hilfe von Schrauben (12) direkt miteinander verbunden sind.

7. Rotationsscheibenfilter (1) gemäß dem vorangegangenen Anspruch, **dadurch gekennzeichnet, dass** der Grundrahmen (5) Durchgangsbohrungen (14) aufweist, durch die sich die Schrauben (12) ausgehend von einem Filterrahmen (7) bis zum zweiten Filterrahmen (7) erstrecken.

8. Rotationsscheibenfilter (1) gemäß Anspruch 6 oder 7, **dadurch gekennzeichnet, dass** die Schrauben (12) jeweils direkt in ein Gewinde (18) im Filterrahmen (7) eingreifen.

9. Rotationsscheibenfilter (1) gemäß einem der Ansprüche 6 bis 8, **dadurch gekennzeichnet, dass** sich ein erster Teil der Schraubenköpfe (13) der Schrauben (12) eines Filtermoduls (4) auf der Seite des ersten Filterrahmens (7) und ein zweiter Teil der Schraubenköpfe (13) auf der Seite des zweiten Filterrahmens (7) des Filtermoduls (4) befindet.

10. Rotationsscheibenfilter (1) gemäß einem der vorangegangenen Ansprüche, **dadurch gekennzeichnet, dass** die Filterrahmen (7) und der Grundrahmen (5) eines Filtermoduls (4) mit Hilfe von Verbindungselementen formschlüssig in Verbindung stehen, wobei die Verbindungselemente eine Relativbewegung zwischen Filterrahmen (7) und Grundrahmen (5) in Richtung der Längserstreckung der Gewindespindel (10) begrenzen oder verhindern.

11. Rotationsscheibenfilter (1) gemäß dem vorangegangenen Anspruch, **dadurch gekennzeichnet, dass** ein Teil der Verbindungselemente als Zapfen (15) und ein weiterer Teil der Verbindungselemente als Vertiefungen (16) ausgebildet sind, wobei die Zapfen (15) in die Vertiefungen (16) ragen.

12. Rotationsscheibenfilter (1) gemäß einem der vorangegangenen Ansprüche, **dadurch gekennzeichnet, dass** die Filterrahmen (7) jeweils eine oder mehrere Verstrebungen (17) aufweisen, die sich zwischen gegenüberliegenden und/oder benachbarten Abschnitten des Filterrahmens (7) erstreckt bzw. erstrecken.

13. Rotationsscheibenfilter (1) gemäß dem vorangegangenen Anspruch, **dadurch gekennzeichnet, dass** die oder eine der Verstrebungen (17) eines jeweiligen Filtermoduls (4) Y-förmig ausgebildet ist.

14. Rotationsscheibenfilter (1) gemäß dem vorangegangenen Anspruch **dadurch gekennzeichnet, dass** sich die Gewindespindel (10) parallel zu einem Schenkel (19) der Y-förmigen Verstrebung erstreckt.

## Claims

1. A rotary disk filter (1) with a central pipe (2) and multiple filter disks (3) arranged adjacent to one another in the longitudinal direction of the central pipe (2) and connected to the central pipe (2),
- wherein each filter disk (3) includes multiple filter modules (4) arranged adjacent to one another in the circumferential direction of the central pipe (2), each having a base frame (5) and two filter elements (6), which each include a filter frame (7) and a filter surface (8) connected to the filter frame (7),
- wherein the base frame (5) and the two filter elements (6) delimit a cavity (9) for accommodating liquid to be filtered,
- wherein the cavity (9) is fluidically connected to the central pipe (2) for fluid exchange, and
- wherein the filter frames (7) are detachably connected to both sides of the base frame (5), and so the filter elements (6), as necessary, are removable from the base frame (5) and replaceable with new filter elements (6),
**characterized in that** each filter module (4) is fixed at the central pipe (2) with the aid of a threaded spindle (10) independently of the remaining filter modules, wherein the threaded spindle (10) extends through the filter module (4) in the radial direction with respect to the central pipe (2).

2. The rotary disk filter (1) according to the preceding claim,
**characterized in that** the filter modules (4) are connected to the central pipe (2) exclusively via the threaded spindles (10) and no direct mutual fixation of adjacent filter modules (4) exists in the circumferential direction of the central pipe (2).

3. The rotary disk filter (1) according to one of the preceding claims, **characterized in that** the filter modules (4) each have an interior guide for one of the threaded spindles (10).

4. The rotary disk filter (1) according to one of the preceding claims, **characterized in that** the guide includes a guide pipe (11), which extends between two opposite sides of the base frame (5) and is connected thereto.

5. The rotary disk filter (1) according to one of the preceding claims, **characterized in that** the guide pipe (11) is an integral part of the base frame (5) or is directly connected thereto.

6. The rotary disk filter (1) according to one of the preceding claims, **characterized in that** the two filter frames (7) of a filter module (4) are directly connected to one another with the aid of screws (12).

7. The rotary disk filter (1) according to one of the preceding claim, **characterized in that** the base frame (5) has through-bores (14), through which the screws extend, starting from one filter frame (7) to the second filter frame (7).

8. The rotary disk filter (1) according to the claims 6 or 7, **characterized in that** the screws (12) each engage directly into a thread (18) in the filter frame (7).

9. The rotary disk filter (1) according to one of the claims 6 to 8, **characterized in that** a first portion of the screw heads (13) of the screws (12) of a filter module (4) is located on the side of the first filter frame (7) and a second portion of the screw heads (13) is located on the side of the second filter frame (7) of the filter module (4).

10. The rotary disk filter (1) according to one of the preceding claims, **characterized in that** the filter frames (7) and the base frame (5) of a filter module (4) are connected in a form-locking manner with the aid of connecting elements, wherein the connecting elements limit or prevent a relative motion between the filter frames (7) and the base frame (5) in the direction of the longitudinal extension of the threaded spindle (10).

11. The rotary disk filter (1) according to one of the preceding claims, **characterized in that** one portion of the connecting elements is designed as pegs (15) and a second portion of the connecting elements is designed as recesses (16), wherein the pegs (15) protrude into the recesses (16).

12. The rotary disk filter (1) according to one of the preceding claims, **characterized in that** the filter frames (7) each have one or multiple brace(s) (17), which extend(s) between opposite and/or adjacent sections of the filter frame (7).

13. The rotary disk filter (1) according to the preceding claim,
**characterized in that** the or one of the brace(s) (17) of a particular filter module (4) has a Y-shape.

14. The rotary disk filter (1) according to the preceding claims,
**characterized in that** the threaded spindle (10) extends in parallel to a limb (19) of the Y-shaped brace.

## Revendications

1. Filtre à disques rotatifs (1) comprenant un tube central (2) ainsi que plusieurs disques filtrants (3) disposés les uns à côté des autres dans la direction longitudinale du tube central (2) et reliés au tube central (2),
- chaque disque filtrant (3) comprenant plusieurs modules filtrants (4) disposés les uns à côté des autres dans la direction circonférentielle du tube central (2), qui présentent chacun un cadre de base (5) ainsi que deux éléments filtrants (6) avec chacun un cadre de filtre (7) et une surface filtrante (8) reliée au cadre de filtre (7),
- le cadre de base (5) et les deux éléments filtrants (6) délimitant un espace creux (9) destiné à accueillir le liquide à filtrer,
- l'espace creux (9) étant en communication fluidique avec le tube central (2) pour l'échange de liquide, et
- les cadres de filtre (7) étant reliés des deux côtés et de manière amovible au cadre de base (5), de sorte que, en cas de besoin, les éléments filtrants (6) peuvent être retirés du cadre de base (5) et remplacés par des éléments filtrants (6) neufs,
**caractérisé en ce que** chaque module filtrant (4) est fixé sur le tube central (2) à l'aide d'une broche filetée (10) indépendamment des autres modules filtrant, la broche filetée (10), par rapport au tube central (2), s'étendant dans la direction radiale à travers le module filtrant (4).

2. Filtre à disques rotatifs (1) selon la revendication précédente, **caractérisé en ce que** les modules filtrants (4) sont reliés au tube central (2) exclusivement par les broches filetées (10) et qu'il n'existe pas de fixation mutuelle directe de modules filtrants (4) voisins dans la direction circonférentielle du tube central (2).

3. Filtre à disques rotatifs (1) selon l'une quelconque des revendications précédentes, **caractérisé en ce que** les modules filtrants (4) présentent chacun un guidage intérieur pour l'une des broches filetées (10).

4. Filtre à disques rotatifs (1) selon l'une quelconque des revendications précédentes, **caractérisé en ce que** le guidage comprend un tube de guidage (11) qui s'étend entre deux côtés opposés du cadre de base (5) et qui est relié à celui-ci.

5. Filtre à disques rotatifs (1) selon la revendication précédente, **caractérisé en ce que** le tube de guidage (11) fait partie du cadre de base (5) ou est directement relié à celui-ci.

6. Filtre à disques rotatifs (1) selon l'une quelconque des revendications précédentes, **caractérisé en ce que** les deux cadres de filtre (7) d'un module filtrant (4) sont directement reliés l'un à l'autre à l'aide de vis (12).

7. Filtre à disques rotatifs (1) selon la revendication précédente, **caractérisé en ce que** le cadre de base (5) présente des alésages traversants (14) à travers lesquels les vis (12) s'étendent depuis un cadre de filtre (7) jusqu'au deuxième cadre de filtre (7).

8. Filtre à disques rotatifs (1) selon la revendication 6 ou 7, **caractérisé en ce que** les vis (12) viennent en prise chacune directement dans un filetage (18) dans le cadre de filtre (7).

9. Filtre à disques rotatifs (1) selon l'une quelconque des revendications 6 à 8, **caractérisé en ce qu'**une première partie des têtes de vis (13) des vis (12) d'un module filtrant (4) est située du côté du premier cadre de filtre (7) et une deuxième partie des têtes de vis (13) est située du côté du deuxième cadre de filtre (7) du module filtrant (4).

10. Filtre à disques rotatifs (1) selon l'une quelconque des revendications précédentes, **caractérisé en ce que** les cadres de filtre (7) et le cadre de base (5) d'un module filtrant (4) sont reliés par complémentarité de formes à l'aide d'éléments de liaison, les éléments de liaison limitant ou empêchant un mouvement relatif entre les cadres de filtre (7) et le cadre de base (5) dans la direction de l'étendue longitudinale de la broche filetée (10).

11. Filtre à disques rotatifs (1) selon la revendication précédente, **caractérisé en ce qu'**une partie des éléments de liaison sont réalisés sous forme de tenons (15) et une autre partie des éléments de liaison sont réalisés sous forme de creux (16), les tenons (15) faisant saillie dans les creux (16).

12. Filtre à disques rotatifs (1) selon l'une quelconque des revendications précédentes, **caractérisé en ce que** les cadres de filtre (7) comprennent chacun une ou plusieurs entretoises (17) qui s'étend(ent) entre des sections opposées et/ou adjacentes du cadre de filtre (7).

13. Filtre à disques rotatifs (1) selon la revendication précédente, **caractérisé en ce que** la ou l'une des entretoises (17) d'un module filtrant (4) respectif se présente sous une forme en Y.

14. Filtre à disques rotatifs (1) selon la revendication précédente, **caractérisé en ce que** la broche filetée (10) s'étend parallèlement à une branche (19) de l'entretoise en forme de Y.
